(19) Europäisches Patentamt / European Patent Office / Office européen des brevets

(11) **EP 3 384 263 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **16745484.2**

(22) Anmeldetag: **02.08.2016**

(51) Int Cl.:
**G01L 9/00** (2006.01)     **G01L 13/02** (2006.01)
**G01L 19/06** (2006.01)     **G01L 19/14** (2006.01)

(86) Internationale Anmeldenummer:
**PCT/EP2016/068410**

(87) Internationale Veröffentlichungsnummer:
**WO 2017/092887 (08.06.2017 Gazette 2017/23)**

(54) **DRUCKSENSORANORDNUNG SOWIE MESSUMFORMER ZUR PROZESSINSTRUMENTIERUNG MIT EINER DERARTIGEN DRUCKSENSORANORDNUNG**

PRESSURE SENSOR ASEMBLY AND MEASUREMENT TRANSDUCER FOR PROCESS INSTRUMENTATION WITH SUCH A PRESSURE SENSOR ASSEMBLY

ENSEMBLE CAPTEUR DE PRESSION ET TRANSDUCTEUR DE MESURE POUR L'INSTRUMENTATION DE TRAITEMENT COMPORTANT UN TEL ENSEMBLE CAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2015 DE 102015223784**

(43) Veröffentlichungstag der Anmeldung:
**10.10.2018 Patentblatt 2018/41**

(73) Patentinhaber: **Siemens Aktiengesellschaft 80333 München (DE)**

(72) Erfinder:
• **ENS, Wolfgang**
  **76351 Linkenheim (DE)**
• **ERDLER, Gilbert Alexander**
  **76275 Ettlingen (DE)**
• **KLEHR, Stefan**
  **76764 Rheinzabern (DE)**
• **VON DOSKY, Stefan**
  **76149 Karlsruhe (DE)**

(56) Entgegenhaltungen:
EP-A1- 2 294 376     US-A- 5 796 007
US-A1- 2001 032 515

EP 3 384 263 B1

**Beschreibung**

Die Erfindung betrifft eine Drucksensoranordnung gemäß dem Oberbegriff des Anspruchs 1 sowie einen Messumformer zur Prozessinstrumentierung mit einer derartigen Drucksensoranordnung gemäß Anspruch 3.

Eine solche Drucksensoranordnung ist aus der US 5 796 007 A bekannt.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer speicherprogrammierbaren Steuerung oder einer Leitstation vorgegebenen Strategie beeinflusst werden. Als Beispiele für Stellglieder seien ein Regelventil, eine Heizung oder eine Pumpe genannt. Insbesondere in verfahrenstechnischen Anlagen stellen Druckmessumformer wesentliche sensorische Komponenten im Rahmen von automatisierten Produktionsabläufen dar. Im Hinblick auf ein optimales Anlagenverhalten und eine dauerhaft hohe Produktqualität sind qualitativ hochwertige Messumformer notwendig, die auch unter extremen Bedingungen langzeitstabile und wenig fehlerbehaftete Messwerte liefern.

Aus der DE 196 08 321 C2 ist eine Drucksensoranordnung mit einem Überlastschutzsystem bekannt, die als Aufnehmer oder Messzelle in einem Messumformer für Differenzdruck eingesetzt werden kann. Die bekannte Messzelle ist ölbefüllt, sodass der eigentliche Drucksensor von einem eventuell aggressiven Prozessmedium getrennt ist. Das Überlastschutzsystem besteht aus mehreren zueinander korrespondierenden Membranen sowie einer exakt daran angepassten Ölbefüllung. Die Konstruktion einer derartigen Messzelle ist daher vergleichsweise aufwendig und zur Herstellung der Messzelle wird eine Vielzahl von Schweißprozessen benötigt. Zudem unterliegen die Teilegeometrie, die Materialeigenschaften und die Schweißparameter hohen Genauigkeitsanforderungen. Die elektrischen Kontaktierungen des eigentlichen Drucksensors müssen beispielsweise über hochdruckfeste Glasdurchführungen aus dem druckbeaufschlagten Innenraum der Messzelle nach außen zu einer Elektronikeinheit geführt werden, in welcher die Signalverarbeitung zur Bestimmung des Druckmesswerts durchgeführt wird. Die Messzelle ist zudem nur bedingt vakuumfest und auch nur für einen vergleichsweise eingeschränkten Temperaturbereich einsetzbar. Bei Hygieneanwendungen, in denen die Gefahr einer Ölkontamination des Prozessmediums unbedingt vermieden werden muss, kann die Messzelle nicht verwendet werden.

Eine weitere Drucksensoranordnung ist aus der EP 2 294 376 B1 bekannt. Dort wird zur Druckerfassung eine Membran mit mehreren zueinander abgewinkelten Membranabschnitten verwendet. Ein Membranabschnitt ist als Trennmembran im Querschnitt eines Druckrohrs angeordnet und ein dazu abgewinkelter Membranabschnitt als Seitenwandmembran im Bereich der Druckrohrwandung. Eine an der Trennmembran anliegende Druckdifferenz führt zu deren Deformation, die sich aufgrund eines festen Winkels zwischen den beiden Membranabschnitten auf die Seitenwandmembran überträgt, sodass die dadurch bedingte Deformation der Seitenwandmembran ebenfalls die Druckverhältnisse innerhalb des Druckrohrs wiedergibt. Mittel zum Erfassen einer Membrandeformation werden auf der Außenseite der Seitenwandmembran angeordnet, damit diese nicht in Kontakt zum Medium stehen, dessen Druck gemessen werden soll. Aufgrund der Anordnung des ersten Membranabschnitts als Trennmembran im Querschnitt des Rohrs kann die bekannte Drucksensoranordnung sowohl als Absolutdrucksensor eingesetzt werden als auch als Differenzdrucksensor, je nachdem, ob auf der einen Seite der Trennmembran ein definierter Referenzdruck anliegt oder die Trennmembran beidseitig mit einem Messdruck beaufschlagt wird. Die bekannte Drucksensoranordnung ist für einen Einsatz im Rahmen der Überwachung von Dieselpartikelfiltern vorgesehen, um den Abgasdruck vor und hinter dem Partikelfilter zu messen und so den Stand seiner Beladung zu ermitteln. Dabei tritt, im Unterschied zur Prozessinstrumentierung, ein allenfalls geringer statischer Druck auf. Bei der beschriebenen Drucksensoranordnung ist jedoch die Differenzdruckmessung vom statischen Druck, der insbesondere zu einer Deformation der Seitenwandmembran führt, in nachteiliger Weise stark abhängig und dessen Kompensation nur unzureichend möglich, da diese eine exakte Positionierung der auf der Rohraußenwand applizierten Dehnungsaufnehmer voraussetzt, die in der Praxis kaum mit der erforderlichen Genauigkeit erreichbar ist.

Aus der DE 93 00 776 U1 ist ein Drucksensor bekannt, der ein dosenförmiges Gehäuse aufweist, welches durch eine ringförmige Membran in zwei Messkammern unterteilt ist. Die Membran ist mittels zentral angeordneter Ringe gewellt und im mittleren Bereich als scheibenförmige Druckwand ausgebildet. Eine Druckdifferenz in den beiden Messkammern führt zu einer axialen Verschiebung, die durch einen induktiven Sensor erfasst wird. In nachteiliger Weise ist der induktive Sensor dabei innerhalb einer Messkammer angeordnet.

Bei der aus der eingangs erwähnten US 5 796 007 A bekannten Drucksensoranordnung ist die Membran im mittleren Bereich biegesteif ausgeführt und im Randbereich durch Aufhängung mit zwei im Wesentlichen parallel zur Ebene der Membran verlaufenden, bezüglich der Rohrachse rotationssymmetrischen Schenkeln in axialer Richtung federnd im Rohr gelagert, so dass eine axiale Verschiebung der Membran in der Nähe der Rohrwand auftritt und es dadurch möglich ist, diese axiale Verschiebung quasi von außen messtechnisch zu erfassen.

Insbesondere gegenüber der Drucksensoranordnung, welche aus der bereits eingangs genannten DE 196 08 321 C2 bekannt ist, hat diese Anordnung mit einem Rohr, in dessen Querschnitt eine mit dem zu messenden Druck beaufschlagte Membran angeordnet ist, den Vorteil, dass ihr konstruktiver Aufbau erheblich einfacher ist, da keine Ölfüllung, kein korrespondierendes Überlastschutzsystem, keine druckfeste Glasdurchführung und weniger Schweißverbindungen erforderlich sind. Ein Sensor zur Erfassung der axialen Verschiebung der Membran kann in vorteilhafter Weise außerhalb des medienberührten Raumes angeordnet werden, sodass es zu keiner Interaktion zwischen Sensor und Füllöl oder Prozessmedium kommen kann. Dadurch wird eine Drucksensoranordnung mit hoher Langzeitstabilität und robustem Design erhältlich. Da kein Füllöl verwendet wird, treten die genannten Probleme einer beschränkten Vakuumfestigkeit, eines vergleichsweise eingeschränkten Temperaturbereichs und einer fehlenden Eignung für Hygieneanwendungen bei einem mit der neuen Drucksensoranordnung ausgestatteten Messumformer nicht mehr auf.

Die Stirnseite der Membran ist zur Ausbildung der beiden Schenkel mit zwei in radialer Richtung in die Membran hineinragenden Nuten versehen und der Steg zwischen den beiden Nuten als mechanisches Übertragungsmittel ausgebildet, welches die Außenseite des Rohrs in radialer Richtung zumindest teilweise überragt und somit die axiale Verschiebung der Membran an die Außenseite des Rohrs herausführt, wobei diese mittels eines Biegebalkens und Dehnungsmessstreifen zur Erzeugung eines Messsignals erfasst wird.

Aus der US 2001/0032515 A1 ist ebenfalls eine Drucksensoranordnung bekannt, bei der ist die Membran im mittleren Bereich biegesteif ausgeführt und im Randbereich durch Aufhängung mit zwei im Wesentlichen parallel zur Ebene der Membran verlaufenden, bezüglich einer Rohrachse rotationssymmetrischen Schenkeln in axialer Richtung federnd gelagert. Die Verschiebung der Membran wird kapazitiv zwischen den Schenkeln und einem von außen radial in den Zwischenraum zwischen den Schenkeln hineinragenden feststehenden Steg erfasst. Die Mittel zur Erfassung der Verschiebung der Membran liegen im Inneren der Drucksensoranordnung bzw. bei deren Einbau in ein Rohr im Inneren des Rohres.

Der Erfindung liegt die Aufgabe zugrunde, eine Drucksensoranordnung mit einer zu Dehnungsmessstreifen alternativen Erfassung der axialen Membranverschiebung im Außenbereich des Rohres anzugeben, die ist besonders einfach zu fertigen und damit kostengünstig herstellbar ist.

Zur Lösung dieser Aufgabe weist die neue Drucksensoranordnung der eingangs genannten Art die im kennzeichnenden Teil des Anspruchs 1 angegebenen Merkmale auf. In dem abhängigen Anspruch 2 ist eine vorteilhafte Weiterbildungen der Erfindung, in Anspruch 3 ein Messumformer zur Prozessinstrumentierung mit einer derartigen Drucksensoranordnung angegeben.

Als Mittel zur Erfassung der axialen Verschiebung werden gemäß der Erfindung zwei Kondensatoren mit den Umfang des Rohrs zumindest teilweise umschließenden Ringelektroden eingesetzt, wobei die eine Elektrode des einen Kondensators auf oder mit der einen Seite des Stegs und die eine Elektrode des anderen Kondensators auf oder mit der in axialer Richtung gegenüberliegenden Seite des Stegs realisiert ist, so dass sich die Kapazitäten der beiden Kondensatoren bei einer axialen Verschiebung der Membran gegensinnig verändern. Die beiden Kondensatoren erzeugen somit ein differenzielles Messsignal, das zur Bestimmung der Verschiebung und damit des zu messenden Drucks durch eine sich anschließende Signalverarbeitung ausgewertet werden kann. Damit wird in vorteilhafter Weise eine Kompensation von Temperatureinflüssen oder des statischen Drucks ermöglicht. Bei entsprechender Ausgestaltung des eine radiale Membranverlängerung bildenden Stegs kann dieser unmittelbar als Elektrode dienen oder es können beidseitig gesonderte Elektroden, die gegenüber dem Steg elektrisch isoliert sind, auf den einander gegenüberliegenden Seiten des Steges appliziert werden.

Die jeweils anderen Elektroden der beiden Kondensatoren sind an den in axialer Richtung einander gegenüberliegenden Innenseiten einer den Steg übergreifenden Ringkappe angeordnet. In vorteilhafter Weise hat eine derartige Ringkappe, die aus zwei ringförmigen Formteilen hergestellt sein kann, zusätzlich die Funktion einer Schutzkappe, welche die Kondensatoren vor Schmutz oder Beschädigung schützt. Die Ringkappe kann in vorteilhafter Weise auch zur Realisierung einer Überlastsicherung dienen. Dazu kann die Ringkappe mit einer zum Steg korrespondierenden und dessen Rand umfassenden Ringnut versehen sein, die an ihren einander gegenüberliegenden Seiten Anschlagflächen für den Steg zur Begrenzung dessen axialer Verschiebung im Überlastfall besitzt. Ein Überlastschutz, durch welchen bei starker Druckbelastung eine plastische Verformung oder ein Bersten der Schenkel verhindert werden kann, ist auf diese Weise mit besonders einfachen konstruktiven Mitteln erhältlich. Diese Art der Realisierung eines Überlastschutzes hat weiterhin den Vorteil, dass die dazu verwendeten Komponenten vom Prozessmedium getrennt und insbesondere bei aggressiven Medien vor diesen geschützt sind.

Die beiden Nuten sind vorzugsweise symmetrisch bezüglich der Mittenebene der Membran durch Fräsen oder Drehen hergestellt. Eine derartige Drucksensoranordnung ist besonders einfach zu fertigen und damit kostengünstig herstellbar.

Die Schenkel zur Aufhängung der Membran können jeweils um einen Winkel von maximal 10° gegenüber der Ebene der Membran geneigt sein. Die Neigung wird dabei als der Winkel definiert, der zwischen einer gedachten Verbindungslinie, die als eine Gerade die Schenkelanschlusspunkte an der Membran und am Rohr miteinander verbindet, und der Membranebene eingeschlossen wird, wobei die Verbindungslinie die Rohrachse schneidet. Eine Neigung der beiden Schenkel der Membranaufhängung um einen kleinen Winkel gegenüber der Membranebene kann beispielsweise erreicht werden, indem zwei ursprünglich parallele Schenkel durch eine mechanische Vorspannung aus ihrer parallelen Lage, die auch als Nulllage bezeichnet werden kann, verschoben werden. Damit sind die beiden Schenkel immer außerhalb ihrer Nulllage, sowohl bei Nulldruck als auch über den gesamten Druckmessbereich. Eine derartige Winkellage der Schenkel hat den Vorteil, dass einem möglichen Knackfroscheffekt, d. h. einer sprungförmigen axialen Verschiebung der Membran bei Überschreiten der Nulllage, vorgebeugt werden kann. Der beschriebene Knackfroscheffekt könnte ohne diese Maßnahme eventuell zu einer Hysterese in einem durch die Mittel zur Erfassung der Verschiebung gewonnenen Messsignal führen.

Aufgrund der Robustheit, Druck und Vakuumfestigkeit sowie ihrer Unempfindlichkeit gegenüber statischem Druck und Temperatur ist die neue Drucksensoranordnung besonders für einen Einsatz als Messzelle oder Aufnehmer in einem Messumformer zur Prozessinstrumentierung geeignet.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:

Fig 1 ein Längsschnittbild einer Drucksensoranordnung,

Fig 2 einen Randbereich einer Drucksensoranordnung im Längsschnitt,

Fig 3 eine Draufsicht auf eine ringförmige Elektrode,

Fig 4 einen Randbereich einer Drucksensoranordnung bei Belastung,

Fig 5 einen Randbereich einer Drucksensoranordnung im Längsschnitt mit sichtbaren Elektrodenanschlüssen und

Fig 6 einen Elektrodenaufbau mit Abschirmung.

In den Figuren sind gleiche Teile mit gleichen Bezugszeichen versehen.

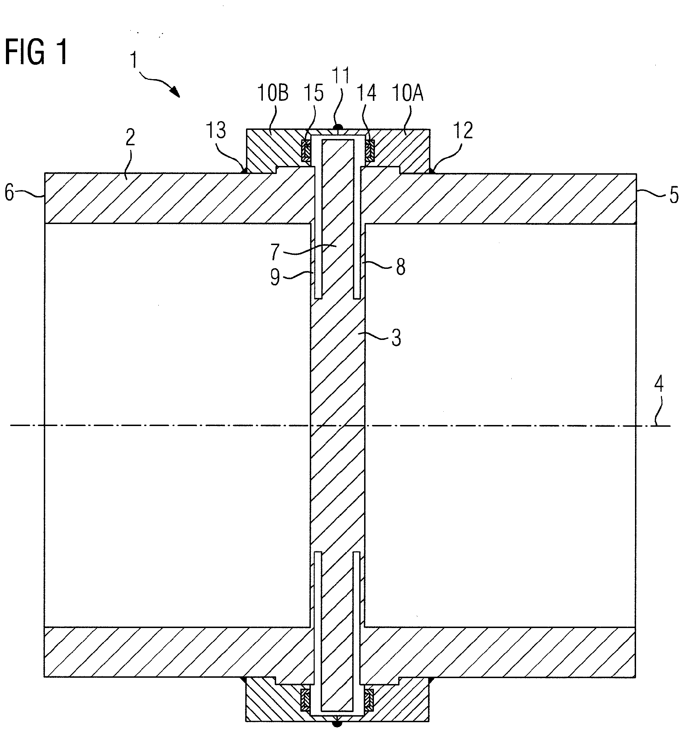

In der Längsschnittdarstellung gemäß Figur 1 ist die prinzipielle Form einer Drucksensoranordnung 1 mit einem Rohr 2, in dessen Querschnitt eine mit dem zu messenden Druck beaufschlagte Membran 3 angeordnet ist, gut erkennbar. Die Form der Drucksensoranordnung 1 ist im Wesentlichen rotationssymmetrisch bezüglich einer Längsachse 4. Bei einer Verwendung der dargestellten Drucksensoranordnung 1 in einem Druckmessumformer zur Prozessinstrumentierung können die beiden Enden 5 und 6 des Rohrs 2 jeweils mit einer in Figur 1 nicht dargestellten Kappe verschlossen werden, über welche Prozessmedium mit dem zu messenden Druck einer Seite der Membran 3 bei einem Absolutdrucksensor oder beiden Seiten der Membran 3 bei einem Differenzdrucksensor zugeführt werden kann. Eine Elektronikeinheit zur Auswertung der durch die Drucksensoranordnung 1 erzeugten, vom jeweils zu messenden Druck abhängigen elektrischen Signale kann auf herkömmliche Art und Weise gestaltet sein und ist ebenfalls in Figur 1 nicht dargestellt. Bei der Membran 3 handelt es sich um eine vergleichsweise dicke Membranscheibe mit im mittleren Bereich hoher Biegesteifigkeit, die im Randbereich zur Herstellung zweier Nuten beidseitig radial schmal geschlitzt ist, sodass zwischen den beiden Nuten ein Steg 7 und an den einander gegenüberliegenden Seiten der Membran 3 ein Schenkel 8 bzw. ein Schenkel 9 verbleiben. Die beiden Schenkel 8 und 9 haben eine geringere Biegesteifigkeit und sorgen so für eine in axialer Richtung federnde Lagerung der Membran 3. Rohr 2 und Membran 3 können durch Drehen aus einem Stahlteil gefertigt werden. Der Steg 7 ist als radiale Membranverlängerung ausgebildet und überträgt eine axiale Verschiebung der Membran 3 an die Außenseite des Rohrs 2, die der Steg 7 in radialer Richtung teilweise überragt. Auf die Außenseite des Rohrs 2 ist eine Ringkappe, die aus zwei Formteilen 10A und 10B besteht, aufgesetzt. Die beiden Formteile 10A und 10B sind an einer Stoßstelle durch eine Schweißnaht 11 fest miteinander verbunden und durch Schweißnähte 12 bzw. 13 mit dem Rohr 2 verschweißt. Der Steg 7 ragt in eine Nut der Ringkappe 10A, 10B hinein, in welcher, wie später noch näher erläutert wird, Mittel zur Erfassung der Verschiebung der Membran 3 angeordnet sind.

In Figur 1 wird deutlich, dass sich der konstruktive Aufbau einer Drucksensoranordnung 1, die auch als Messzelle bezeichnet wird, bei Verwendung einer Membran 3, die im Randbereich durch zwei Schenkel 8 und 9 in axialer Richtung federnd im Rohr 2 gelagert ist, gegenüber einer herkömmlichen Messzelle mit Überlastschutzsystem und Füllöl als Druckmittler erheblich vereinfacht. Das Prozessmedium wird im Falle eines Differenzdruckmessumformers direkt auf die beiden Seiten der Membran 3 geführt und es wird keine Ölfüllung und keine aufwendige Konstruktion eines Überlastschutzsystems benötigt. Schweißprozesse sind nur in geringem Umfang erforderlich und eine druckfeste Glasdurchführung für elektrische Signale kann entfallen. Zudem können Rohr 2 und Membran 3 überwiegend durch Drehen gefertigt werden. Die Abmessungen der Messzelle können so gestaltet werden, dass sie im Hinblick auf ihre mechanischen Schnittstellen zu den übrigen Komponenten eines Messumformers kompatibel zu herkömmlichen Messzellen ist, sodass lediglich die Messzelle, d. h. die gezeigte Drucksensoranordnung 1, ausgetauscht werden muss und Flanschteile, Gehäuse etc. vom herkömmlichen Messumformer übernommen werden können.

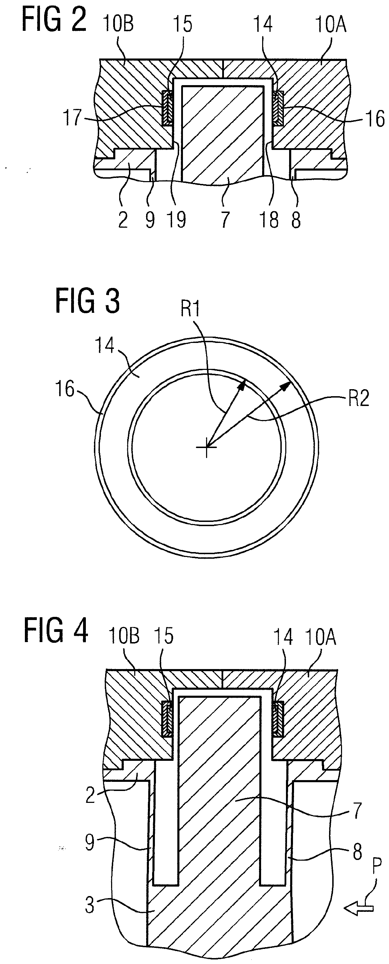

Anhand der Figuren 2 und 3 werden im Folgenden Mittel zur kapazitiven Erfassung der Verschiebung der Membran 3, die an der Außenseite des Rohrs 2 angeordnet sind, näher erläutert. In dem gezeigten Ausführungsbeispiel bildet der Steg 7, der als radiale Membranverlängerung ausgeführt ist, mit seinen in axialer Richtung einander gegenüberliegenden Seitenflächen jeweils eine Elektrode zweier Kondensatoren. Dazu ist der Steg 7 aus elektrisch leitfähigem Material, beispielsweise Edelstahl, gefertigt. Die andere Elektrode 14 des einen Kondensators und die andere Elektrode 15 des anderen Kondensators sind in einen elektrisch isolierenden Trägerring 16 bzw. einen elektrisch isolierenden Trägerring 17 eingebettet und so gegen Kurzschluss isoliert. An den Formteilen 10A und 10B sind jeweils Anschlagflächen 18 bzw. 19 angeformt, auf welchen der Steg 7 bei Überlast zum Anliegen kommt. Dadurch wird eine Durchbiegung der Schenkel 8 und 9 im Überlastfall begrenzt, sodass eine plastische Verformung oder ein Bersten verhindert werden kann.

Figur 3 zeigt eine Sicht beispielsweise auf die Elektrode 14, die in den Trägerring 16 eingebettet ist. Die den Umfangsbereich des Rohrs 2 (Figur 2) umlaufende Elektrode 14 ist ringscheibenförmig mit einem Innenradius $R_1$ und einem Außenradius $R_2$ ausgebildet. Mit einem Abstand d zwischen Steg 7 und Elektrode 14 kann die Kapazität $C_0$ des einen Kondensators, der durch die eine Seite des Stegs 7 als die eine Elektrode und der Elektrode 14 als die andere Elektrode gebildet wird, berechnet werden nach der Formel

$$C_0 = \in_0 \frac{\left({R_2}^2 - {R_1}^2\right)\pi}{d}$$

mit $\varepsilon_0$ - elektrische Feldkonstante.

Bei einer Druckmesszelle mit beispielsweise 50 mm Durchmesser, einer Breite R2-R1 der Elektrode 14 von 2,5 mm sowie einem Abstand von 0,2 mm ergibt sich somit eine Kapazität $C_0$ des Kondensators von 16,5 pF. Wird beispielsweise der Abstand d bei entsprechender Druckbelastung der Membran 3 um nur 50 $\mu$m verringert, erhöht sich die Kapazität um 5,5 pF auf 22 pF, während sich die Kapazität des jeweils anderen Kondensators um 3,3 pF verringert. Diese Kapazitätsänderungen sind sehr gut mit einem Kapazitätsdigitalwandler hoher Auflösung erfassbar.

Die Verbiegung der Schenkel 8, 9 unter Belastung mit einem Druck P der Membran 3 wird anhand Figur 4 verdeutlicht. Im Längsschnitt ist die beidseitige schmale radiale Einschlitzung der Membran 3 gut sichtbar. Dadurch entsteht im Rohr 2 mit den beiden Schenkeln 8 und 9 eine radiale Aufhängung der Membran 3 in einer Form, die an ein Parallelogramm erinnert. Bei dem dargestellten Belastungszustand der Membran 3 mit einem Druck P auf der rechten Seite der Membran 3 erfährt diese eine axiale Verschiebung zur linken Seite. Der Abstand des mit der Elektrode 14 gebildeten Kondensators wird dabei vergrößert, der Abstand des mit der Elektrode 15 gebildeten Kondensators verringert. Somit wird ein gegenläufiges Messsignal erhalten mit dem Vorteil, dass Einflüsse des statischen Drucks und der Temperatur, die zu Änderungen der Ausdehnung der Drucksensoranordnung führen können, sich kaum auf das Messergebnis auswirken. Durch entsprechende Auslegung der Dicke der Schenkel 8 und 9 sowie deren Länge kann der Druckbereich variiert werden, sodass bei grundsätzlich gleichem Aufbau der Drucksensoranordnung Messumformer für unterschiedliche Druckbereiche realisiert werden können.

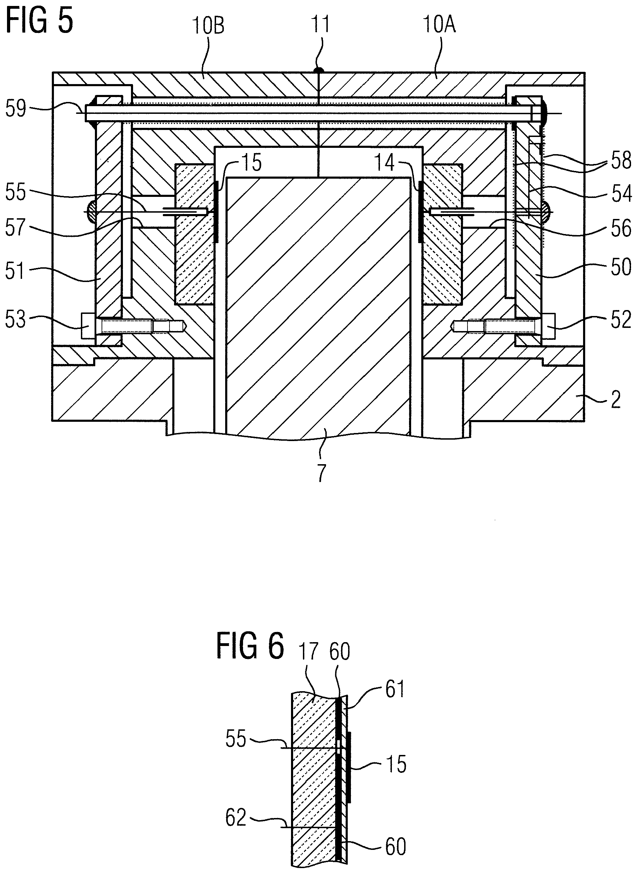

In Figur 5 ist eine Realisierungsmöglichkeit der elektrischen Anschlüsse für die beiden Kondensatoren dargestellt. Die Formteile 10A und 10B, die rotationssymmetrisch ausgebildet sind und die Außenseite des Rohrs 2 über den gesamten Umfangsbereich übergreifen, sind an einer Stelle des Umfangsbereichs mit jeweils einer Einfräsung zur Montage einer Elektronikplatine 50 bzw. 51 versehen. Die Platinen 50 und 51 werden jeweils durch eine Schraube 52 bzw. 53 an den Formteilen 10A bzw. 10B gehalten. Eine Leitung 54 kontaktiert die Elektrode 14, eine Leitung 55 die Elektrode 15. Die Leitungen 54 und 55 sind durch Bohrungen 56 bzw. 57 hindurchgeführt. Damit der Anschluss eines Kabels, das in Figur 5 nicht dargestellt ist und zur Übertragung der Messsignale zu einer ebenfalls nicht dargestellten Auswerteeinrichtung dient, von einer Seite erfolgen kann, ist die Leitung 54, die innerhalb der Elektronikplatine 50 mit einem Guarding 58 versehen ist, mittels einer geschirmten Leitung 59 durch eine weitere Bohrung in den Formteilen 10A und 10B zur linken Seite hindurchgeführt, an welcher sich auch der Anschluss der Elektrode 15 befindet.

Bei dem in den Figuren 1 bis 5 erläuterten Ausführungsbeispiel wird die eine Elektrode der beiden Kondensatoren durch den Steg 7 gebildet und liegt damit auf Massepotential. Dies erleichtert die elektrische Kontaktierung, da keine separate Leitung für diesen Elektrodenanschluss notwendig ist. Dabei ist es vorteilhaft, die Elektroden 14 und 15 jeweils rückseitig gegen Massepotential abzuschirmen, da sonst parasitäre Kapazitäten entstehen würden, die elektrisch parallel zu den eigentlichen Kondensatoren liegen würden. Eine Möglichkeit zur Realisierung einer derartigen Abschirmung ist für das Beispiel der Elektrode 15 in Figur 6 dargestellt. Die Elektrode 15 sowie eine zugehörige Abschirmung 60 sind durch geeignete Metallisierungen einer beidseitig metallisierten Polyimidfolie 61 realisiert und als Vielschichtleiterplatte auf ein Platinenmaterial als Trägerring 17 aufgebracht. Dies ist eine übliche Methode bei der Herstellung von Leiterplatten. Mittels Durchkontaktierungen sind elektrische Anschlussleitungen 55 und 62 zugänglich.

Zusammenfassend werden im Folgenden noch einmal die Vorteile der neuen Drucksensoranordnung kurz skizziert. Durch radiale Einfräsung der Membran mit definierten geometrischen Parametern wird eine neuartige Messzelle mit Druckmembran geschaffen, die größtenteils steif und dennoch drucksensitiv aufgrund der besonderen Membranaufhängung ist. Die parallelogrammähnliche elastische Membranaufhängung ermöglicht durch geschickte Positionierung von Elektrodenflächen eine kapazitive Erfassung und Umwandlung der druckproportionalen mechanischen Auslenkung in ein elektrisches Messsignal. Aufgrund der Symmetrie der Anordnung wird ein differentielles Messsignal erzeug, welches mit positiven Eigenschaften einer Temperaturkompensation sowie einer Kompensation des Einflusses statischen Drucks verbunden ist. Wegen der hohen Biegesteifigkeit der Membran ist ein stabiler mechanischer Überlastschutz integrierbar, der eine übermäßige Auslenkung der Membran im Überlastfall verhindert. Dabei kommt die Drucksensoranordnung auch bei Verwendung als Differenzdruckmesszelle ohne Ölfüllung aus. Da der Überlastschutz nicht medienberührend ist, besteht auch keine Gefahr eines Verklebens. Die Schenkel können aus der Nulllage heraus mit einer gegensinnigen Vorspannung versehen werden, um einen ansonsten möglicherweise auftretenden Knackfroscheffekt zuverlässig zu verhindern. Aufgrund der Erzeugung eines Dif-ferenzmesssignals ist die Störempfindlichkeit ver-gleichsweise gering. Da sich die Kondensatoren in einem hermetisch abgeschlossenen Raum befinden, können zudem keine äußeren parasitären Kapazitäten das Messsignal verfälschen. Aufgrund des Fehlens einer Ölfüllung ist die Drucksensoranordnung in einem ver-gleichsweise großen Temperaturbereich einsetzbar, va-kuumfest und preiswert herstellbar.

**Patentansprüche**

1. Drucksensoranordnung mit einem Rohr (2), in dessen Querschnitt eine mit dem zu messenden Druck (P) beaufschlagte Membran (3) angeordnet ist, wobei die Membran (3) im mittleren Bereich eine hohe Biegesteifigkeit aufweist und im Randbereich durch Aufhängung mit zwei im Wesentlichen parallel zur Ebene der Membran (3) verlaufenden, bezüglich der Rohrachse (4) rotationssymmetrischen Schenkeln (8, 9) in axialer Richtung federnd im Rohr (2) gelagert ist, wobei die Stirnseite der Membran (3) zur Ausbildung der beiden Schenkel (8, 9) mit zwei in radialer Richtung in die Membran (3) hineinragenden Nuten versehen ist, zwischen denen ein die Außenseite des Rohrs (2) in radialer Richtung zumindest teilweise überragender Steg (7) ausgebildet ist, und wobei Mittel (7, 14, 15) zur Erfassung einer von einem zu messenden Druck (p) abhängigen axialen Verschiebung der Membran (3) vorhanden sind, die den Steg (7) als ein Übertragungsmittel (7) zur Anzeige der axialen Verschiebung an der Außenseite des Rohrs (2) umfassen, **dadurch gekennzeichnet, dass** als Mittel zur Erfassung der axialen Verschiebung zwei Kondensatoren (7, 14; 7, 15) mit den Umfang des Rohrs (2) zumindest teilweise umschließenden Elektroden (14, 15) vorgesehen sind, wobei die eine Elektrode (7) des einen Kondensators auf oder mit der einen Seite des Stegs (7) und die eine Elektrode des anderen Kondensators auf oder mit der in axialer Richtung gegenüberliegenden Seite des Stegs (7) realisiert ist und die jeweils anderen Elektroden (14, 15) der beiden Kondensatoren an den in axialer Richtung einander gegenüberliegenden Innenseiten einer den Steg (7) übergreifenden Ringkappe (10A, 10B) angeordnet sind, so dass sich die Kapazitäten der beiden Kondensatoren bei axialer Verschiebung der Membran (3) gegensinnig verändern.

2. Drucksensoranordnung nach Anspruch 1, **dadurch gekennzeichnet, dass** die Ringkappe (10A, 10B) eine zum Steg (7) korrespondierende und dessen Rand umfassende Ringnut aufweist, die Anschlagflächen (18, 19) für den Steg (7) zur Begrenzung der axialen Verschiebung der Membran (3) im Überlastfall besitzt.

3. Messumformer zur Prozessinstrumentierung mit einer Drucksensoranordnung (1) nach einem der vorhergehenden Ansprüche.

**Claims**

1. Pressure sensor assembly with a tube (2), in whose cross-section a membrane (3) to which the pressure to be measured (P) is applied is arranged, wherein the membrane (3) has a high flexural rigidity in the central region, and is resiliently mounted in the tube (2) in the axial direction in the edge region by means of a suspension with two limbs (8, 9) which run essentially parallel to the plane of the membrane (3) and which are in rotational symmetry in relation to the tube axis (4),wherein to form the two limbs (8, 9) the front face of the membrane (3) is provided with two grooves extending into the membrane (3) in a radial direction, between which a strip (7) protruding at least partially in the radial direction beyond the outer side of the tube (2) is embodied, and wherein means (7, 14, 15) for detecting axial displacement of the membrane (3) which is dependent on a pressure (p) to be measured are available, said means (7, 14, 15) comprising the strip (7) as a means of transmission (7) for displaying the axial displacement on the outer side of the tube (2) **characterised in that** as means for detecting the axial displacement, two capacitors (7, 14; 7, 15) with electrodes (14, 15) at least partially surrounding the circumference of the tube (2) are provided, wherein the one electrode (7) of the one capacitor is realized on or with the one side of the strip (7) and the one electrode of the other capacitor is realized on or with the axially opposite side of the strip (7), and the respective other electrodes (14, 15) of the two capacitors are arranged on the axially opposite internal sides of a ring cap (10A, 10B) overlapping the strip (7) so that the capacitances of the two capacitors change inversely upon axial displacement of the membrane (3).

2. Pressure sensor assembly according to claim 1, **characterised in that** the ring cap (10A, 10B) has an annular groove corresponding to the strip (7) and encircling its edge, which comprises stop surfaces (18, 19) for the strip (7) to limit the axial displacement of the membrane (3) in the case of overloading.

3. Measurement transducer for process instrumentation with a pressure sensor assembly (1) according to one of the preceding claims.

**Revendications**

1. Agencement de capteur de pression, comprenant un tuyau (2) dans la section transversale duquel est montée une membrane (3) soumise à la pression (P) à mesurer,
dans lequel la membrane (3) a une grande résistance à la pression dans la partie médiane et, dans la partie de bord, par suspension par deux branches (8, 9) de révolution par rapport à l'axe (4) du tuyau et s'étendant sensiblement parallèlement au plan de la membrane (3), est montée dans le tuyau (2), de manière élastique dans la direction axiale,
la face frontale de la membrane (3) étant, pour constituer les deux branches (8, 9), pourvues de rainures, qui pénètrent dans la membrane (3) dans la direction radiale et entre lesquelles est constituée une âme (7) dépassant, au moins en partie, dans la direction radiale, de la face extérieure du tuyau (2) et dans lequel il est prévu des moyens (7, 14, 15) de détection d'un déplacement axial, qui dépend d'une pression (P) à mesurer, de la membrane (3), les moyens comprenant l'âme (7), comme moyen (7) de transmission, pour indiquer le déplacement axial sur la face extérieure du tuyau (2),
**caractérisé**
**en ce qu'**il est prévu, comme moyen de détection du déplacement axial, deux condensateurs (7, 14 ; 7, 15) ayant des électrodes (14, 15) entourant, au moins en partie, le pourtour du tuyau (2), l'une des électrodes (7) de l'un des condensateurs étant réalisée sur ou avec l'une des faces de l'âme (7) et la une électrode de l'autre condensateur, sur ou avec la face, opposée dans la direction axiale, de l'âme (7) et les autres électrodes (14, 15) respectives des deux condensateurs étant disposées sur les faces intérieures opposées l'une à l'autre dans la direction axiale, une coiffe (10A, 10B) annulaire chevauchant l'âme (7), de manière à ce que les capacités des deux condensateurs se modifient en sens contraire, lorsque la membrane (3) se déplace axialement.

2. Agencement de capteur de pression suivant la revendication 1, **caractérisé en ce que** la coiffe (10A, 10B) annulaire a une rainure annulaire correspondant à l'âme (7) et entourant son bord, rainure qui possède des surfaces (18, 19) de butée pour l'âme (7), afin de limiter le déplacement axial de la membrane en cas de surcharge.

3. Transducteur de mesure pour l'instrumentation de processus, comprenant un agencement (1) de capteur de pression suivant l'une des revendications précédentes.

FIG 1

FIG 2

10B    15    14    10A

17

2  9  19  7  18  8

16

FIG 3

R1

14

16

R2

FIG 4

10B  15    14  10A

2

9

3

7

8

P

## FIG 5

10B    11    10A

59

55
57
51
53

15    14

58
54
56
50
52

2

7

## FIG 6

17 60

55

62

61

15

60

EP 3 384 263 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5796007 A
- DE 19608321 C2
- EP 2294376 B1
- DE 9300776 U1
- US 20010032515 A1